# EUROPEAN PATENT APPLICATION

(11) **EP 4 635 806 A1**
(43) Date of publication of application: **22.10.2025**
(21) Application number: 25168487.4
(22) Date of filing: 04.04.2025
(51) Int. Cl.: B60R 25/31, B60K 35/23, B60R 25/30, G02B 27/01

(54) **SYSTEMS AND METHODS TO PREVENT UNAUTHORIZED VEHICLE OPERATION USING A HEADS-UP DISPLAY**

(30) Priority: 18.04.2024 US 202418639373
(71) Applicant: Harman International Industries, Inc., Stamford, Connecticut 06901 (US)
(72) Inventor: DAS, Saubhagya Ranjan, Stamford, CT 06901 (US)
(74) Representative: Westphal, Mussgnug & Partner, Patentanwälte mbB

(57) **Abstract**

A method includes identifying a vehicle start, detecting a face of an occupant in response to identifying the vehicle start, and performing facing recognition on the detected face. The method further includes determining whether the detected face is associated with an authorized occupant for the vehicle and controlling a HUD system to display normal HUD information in response to determining that the detected face is associated with the authorized occupant for the vehicle. The HUD display is further controlled to perform windshield view blocking in response to determining that the detected face is not associated with the authorized occupant for the vehicle.

## Description

### FIELD

The present disclosure relates to preventing unauthorized vehicle operation, and more particularly, to systems and methods for controlling a heads-up display (HUD) in a vehicle to block the view through a vehicle windshield to prevent the unauthorized vehicle operation.

### BACKGROUND

The statements in this section merely provide background information related to the present disclosure and may not constitute prior art.

Unauthorized use of a vehicle may include, for example, a vehicle theft, a child taking a parent's car without permission, or a valet taking the vehicle for a "joy ride." Different methods to provide security measures in vehicles to prevent unauthorized use, or at least make it more difficult, are known. However, these methods are often focused on preventing access into the vehicle or providing an alarm or notification after unauthorized operation (e.g., theft of the vehicle), but not preventing unauthorized operation after unauthorized access to the vehicle has been identified.

### SUMMARY

This section provides a general summary of the disclosure and is not a comprehensive disclosure of its full scope or all of its features.

The present disclosure provides a method comprising identifying a vehicle start, detecting a face of an occupant in response to identifying the vehicle start, performing facing recognition on the detected face, and determining whether the detected face is associated with an authorized occupant for the vehicle. The method further comprises controlling a HUD system to display normal HUD information in response to determining that the detected face is associated with the authorized occupant for the vehicle. The method additionally comprises controlling the HUD display to perform windshield view blocking in response to determining that the detected face is not associated with the authorized occupant for the vehicle. The method may include providing a notification in response to determining that the detected face is not associated with the authorized occupant for the vehicle or displaying one or more display elements on the windshield to block a view through the windshield in response to determining that the detected face is not associated with the authorized occupant for the vehicle. The method may also include controlling the HUD display to perform windshield view blocking by one of obscuring or blurring a view through the windshield using one or more AR/VR HUD display elements, wherein the one or more AR/VR HUD display elements comprise a colored display element or a high intensity display element and/or wherein an entirety of the windshield is obscured or blocked or a portion of the windshield is obscured or blocked. The method may additional includes detecting the face of the occupant by imaging a face of the occupant using a camera mounted within the vehicle.

The present disclosure also provides a HUD system comprising a camera configured to acquire a facial image of an occupant of a vehicle, a HUD display, and a HUD control arrangement configured to generate and display, via the HUD display, one or more display elements on a windshield of the vehicle in response to determining that the facial image is not associated with an authorized occupant for the vehicle. The HUD system may include a notification system configured to provide a notification in response to determining that the facial image is not associated with the authorized occupant for the vehicle, and/or wherein the HUD control arrangement is further configured to display, via the HUD display, one or more display elements on the windshield to block a view through the windshield in response to determining that the facial image is not associated with the authorized occupant for the vehicle. The HUD system may also include the HUD control arrangement further configured to cause the HUD display to perform windshield view blocking comprising one of obscuring or blurring a view through the windshield using one or more AR/VR HUD display elements and /or wherein the one or more AR/VR HUD display elements comprise a colored display element or a high intensity display element. The entirety of the windshield may be obscured or blocked, or a portion thereof. The HUD system may additionally include the HUD control arrangement further configured to display, via the HUD display, normal HUD information in response to determining that the facial image is associated with the authorized occupant for the vehicle.

The present disclosure also provides one or more non-transitory computer-readable media storing processor-executable instructions that, when executed by at least one processor, cause the at least one processor to: identify a vehicle start; detect a face of an occupant in response to identifying the vehicle start; perform facing recognition on the detected face; determine whether the detected face is associated with an authorized occupant for the vehicle; control a HUD system to display normal HUD information in response to determining that the detected face is associated with the authorized occupant for the vehicle; and control the HUD display to perform windshield view blocking in response to determining that the detected face is not associated with the authorized occupant for the vehicle. The one or more non-transitory computer-readable media may further cause the at least one processor to provide a notification in response to determining that the facial image is not associated with the authorized occupant for the vehicle or to display one or more display elements on the windshield to block a view through a windshield in response to determining that the detected face is not associated with the authorized occupant for the vehicle. The one or more non-transitory computer-readable media may control the HUD display to perform windshield view blocking by one of obscuring or blurring a view through a windshield using one or more AR/VR HUD display elements.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 is a diagram illustrating a portion of a vehicle having a HUD system configured to in accordance with one or more embodiments;
FIG. 2 is a schematic diagram illustrating a HUD control arrangement in accordance with one or more embodiments;
FIG. 3 is a diagram illustrating a process flow corresponding to an authorized occupant in accordance with one or more embodiments;
FIG. 4 is a diagram illustrating a process flow corresponding to an unauthorized occupant in accordance with one or more embodiments; and
FIG. 5 is a flowchart illustrating an example method of controlling a HUD in accordance with one or more embodiments.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

One or more implementations of the present disclosure provide systems and methods for limiting or preventing unauthorized operation of a vehicle using the HUD of the vehicle. In some examples, the HUD in the vehicle is controlled to block the view through a vehicle windshield to prevent the unauthorized vehicle operation. For example, an unauthorized driver is identified and prevented from operating the vehicle, such as to steal the vehicle, using augmented reality/virtual reality (AR/VR) techniques or technologies with the HUD. The unauthorized driver in some implementations is identified using a dash camera (dashcam) when the vehicle starts, with the AR/VR techniques then used to block the windshield display so that the unauthorized driver cannot see outside of the windshield (e.g., cannot see beyond a blurred or obscured windshield). The owner of the vehicle is notified about the attempted unauthorized operation in one or more examples.

As such, various implementations block the view of the unauthorized driver to prevent the unauthorized operation (e.g., theft) of the vehicle and also notify the owner (or other responsible party). If the driver is authorized (e.g., recognized by the dashcam) then one or more examples provide a normal HUD operation that shows useful display information on the windshield and that also makes viewing the windshield and operation of the vehicle possible. Thus, improvements in the prevention of unauthorized vehicle operation are provided in various examples, such as improvements in vehicular security technology by controlling the visibility through a vehicle windshield (e.g., obstructing the view of the vehicle's exterior in front of the vehicle out of the windshield). In some examples, an additional layer of protection against unauthorized vehicle operation is thereby provided.

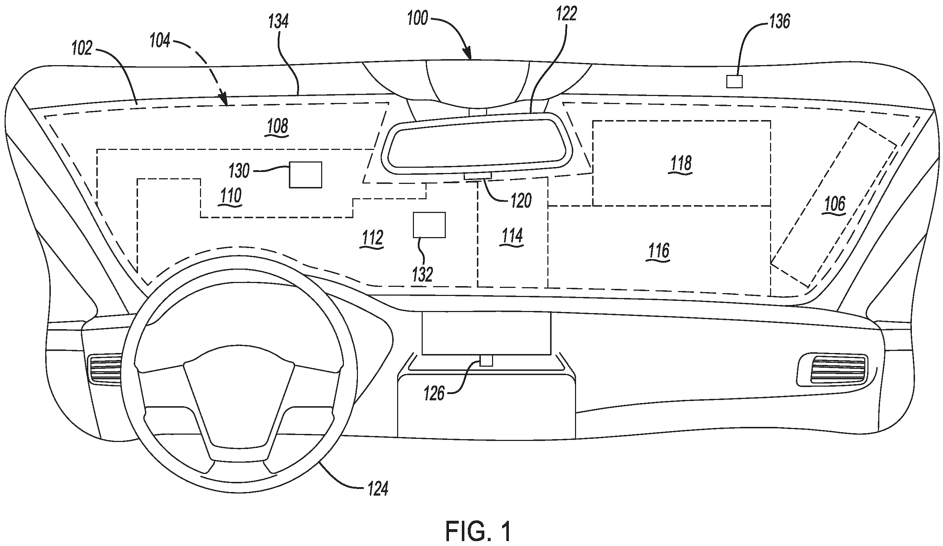

Referring to FIG. 1, a system 100 is shown in accordance with one or more implementations of the present disclosure. The system 100 includes one or more panes 102. The pane 102 may be a windshield, side window, rear window, or another transparent or semitransparent component that allows occupants to see an environment outside of a vehicle. In the illustrated example, the pane 102 is a windshield of the vehicle. The pane 102 may form a barrier between the interior of the vehicle and the exterior of the vehicle, and the pane 102 may allow the transmission of light that is visible to a typical human eye. The visible light may be augmented by a display (e.g., a display 104 configured as a HUD as described in more detail herein). The pane 102 may comprise an edge 134 that forms an outer periphery of the pane. The outer periphery of the pane 102 may join an inner periphery of a support structure (e.g., body panels, cross bars, pillars) of the vehicle. The pane 102 includes one or more layers of glass, plastic, or other components that constitute at least a portion of the display 104.

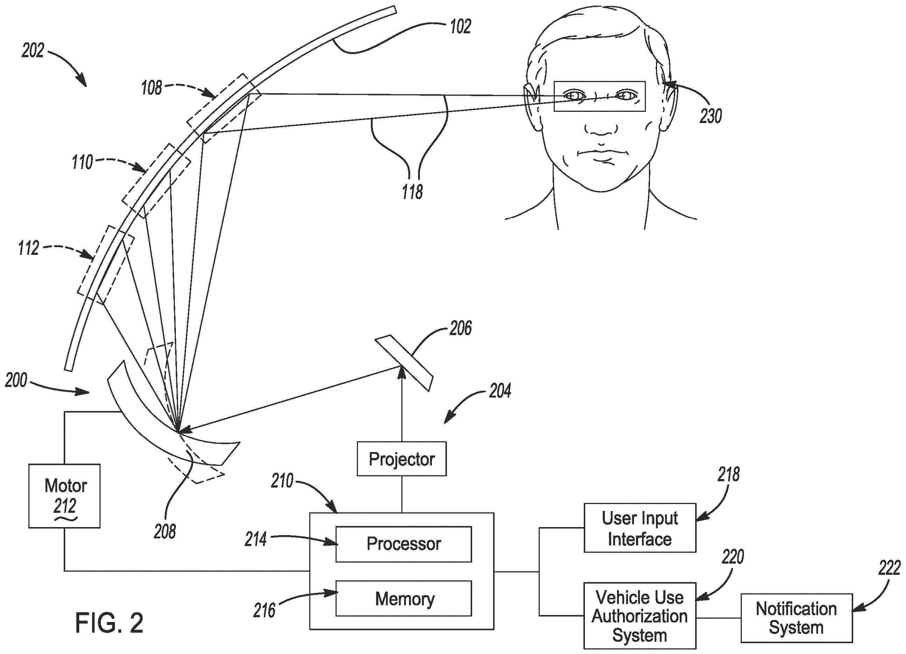

For example, the pane 102 may be configured to permit AR, VR or other elements for display to occupants across the entire pane 102, or one or more portions of the pane 102 as described in more detail herein. The pane 102 may include technologies for providing AR, VR or other display formats in the form of a HUD 200 (shown in FIG. 2). The HUD 200 may provide information, indications, representations, graphics, and other depictions during normal operation (authorized operating state) that facilitate providing information to the occupant(s) of the vehicle without requiring a gaze associated with the occupants to leave the pane 102. As described in more detail herein, during unauthorized operation (unauthorized operating state) the HUD 200 is configured to generate one or more AR, VR, and/or other display elements that block or obscure the view through the pane 102 to outside the vehicle for the occupant(s). Some example technologies for providing the display 104 are described herein, and those described herein are a non-exhaustive list of technologies that are contemplated for providing AR, VR, or other display outputs to occupants through with HUD 200.

The display 104 may cause a visual output. The visual output may comprise one or more elements 130, 132 that can be varied, for example, based upon whether the occupant(s) of the vehicle are authorized or unauthorized as discussed in more detail herein. The user interface element 130, 132 may be used to interface with the vehicle or other systems during authorized operation and prevent interfacing with the vehicle (e.g., driving the vehicle) during unauthorized operation. For example, during authorized operation, the user interface element 130, 132 may be depicted as a knob, switch, button, or another control used to perform an operation (e.g., start a movie, adjust volume, change air conditioning, lock doors); or the visual output may comprise content (e.g., videos, images, graphics) or any other emission of light within the electromagnetic spectrum or that is perceivable to the human eye. During unauthorized operation, the user interface element 130, 132 may be depicted as blocking, blurring, obscuring or other display elements that prevent a clear view through the pane 102.

The display 104 includes at least one region (e.g., regions 106, 108, 110, 112, 114, 116, 118) for selectively depicting information of other display elements on the pane 102 such that light through the pane 102 is transmitted to an eye of the occupant that allows operation of the vehicle when an authorized occupant is present and prevents or limits operation of the vehicle when an unauthorized occupant is present. The transmission of light may be augmented, providing an augmented reality for the occupant that, for example, facilitates driving the vehicle or prevents or hinders driving the vehicle. Thus, the visual representation may be based on the type of occupant of a vehicle. The regions 106, 108, 110, 112, 114, 116, 118 may be defined by locations that are associated with a particular display technology. For example, regions near the dashboard (e.g., regions 112, 114, 116) may be provided by the HUD 200 based on a projector or otherwise and regions (e.g., regions 108, 110, 118) near the top of the pane 102 or on a roof portion of the pane 102 may be provided by a technology based on an organic light emitting diode (OLED) array, liquid crystal display, transparent display, microLED, neoQLED, or otherwise. The output from the HUD technology may be integrated together such that the display 104 fills the entire pane or portions thereof. The regions 106, 108, 110, 112, 114, 116, 118 are shown as various shapes and sizes and integrated together in a patchwork such that the display provides a desired area of coverage. The regions may have adjacent borders such that the depiction of a visional display elements is seamless or that the occupant cannot perceive that the depiction is provided by different display technologies. It should be appreciated that a single display technology may be used in some examples, and additional or fewer regions can be provided, such as having only a single region to many different regions.

The system 100 includes one or more devices for identifying the occupant(s) of the vehicle, such as a camera 120 (e.g., an in-vehicle camera mounted to a rear-view mirror 122, or a dashcam, or other imaging device), a sensor 126 (e.g., a visual light camera, infrared detector), or other device for use in determining whether the occupant(s) of the vehicle are authorized or unauthorized. It should be appreciated that in some examples, only a single device is provided, while in other examples, multiple devices are provided. For example, the camera 120 in various implementations is configured to perform facial recognition of one or more vehicle occupants and determine if vehicle use is unauthorized. The vehicle occupants may include a driver or a driver and one or more vehicle passengers. The one or more cameras 120 may be arranged anywhere in the cabin of the vehicle. In particular, the camera(s) 120 may be arranged in the vehicle in a manner which enables the camera(s) 120 to capture facial images of the driver. In some examples, the camera(s) 120 may also be arranged to capture facial images of vehicle passengers. It should be noted that the vehicle can be any type of vehicle, such as a car, truck, boat, plane, etc.

The camera 120 may be an attachment to or fixture of the vehicle cabin. The camera 120 may be factory installed or an aftermarket device for the vehicle. Additionally or alternatively, the camera(s) 120 may be integrated with one or more vehicle fixtures. Non-limiting examples include the on-board computing unit (OBU), the rear-view mirror 122, and/or a steering wheel 124. The camera 120 may be, for example, a wide angle (e.g., fish eye) camera having high, medium, or low resolution.

The camera 120 communicates with a vehicle use authorization system 220 (shown in FIG. 2) in some examples. The vehicle use authorization system 220 may operate entirely on-board, perform functions on-board and off-board, or operate entirely off board, to determine whether the one or more occupants are authorized or unauthorized.

The camera(s) 120 may determine while the vehicle is parked, stopped, or moving (e.g., periodically determine) if a vehicle driver (or passenger) is unauthorized to use the vehicle by receiving and processing the facial images of the occupant(s) of the vehicle. In one example, the periodic determination may be made every predefined number of seconds and/or minutes after vehicle entry. Additionally or alternatively, the periodic determination may be made based on one or more triggers (e.g. attempted car start without a key, attempted entry without a key, etc.). The facial processing can occur as many times as desired or needed such that unauthorized use of the vehicle is prevented.

Referring to FIG. 2 and with continued reference to FIG. 1, regions, 108, 110, and 112 of the display 104 are shown for example and ease of explanation as part of a HUD control arrangement 202 (also referred to as a HUD system) that includes the HUD 200. As described herein, the display 104 may comprise one or more technologies for providing AR, VR, or other display elements to the occupants 230 (one occupant 230 that is seated in a driver seat is shown). For example, the display 104 may be generated by a projector 204. For example, the display 104 may be based on a technology that reflects light emitted from the projector 204. The projector 204 may be configured to emit light toward one or more mirrors 206, 208 to depict one or more display elements or features (e.g., AR or VR features) on one or more regions (e.g., the region 108, 112, 114). The light emitted by the projector 204 may be reflected off of the pane 102 to generate the display 104 viewable by the occupant 230 of the vehicle from a driver seat and/or a passenger seat. It should be noted that other technologies may be used for providing an AR, VR, or other displays for the occupants 230. For example, the display 104 may be generated based on one or more light emitting diodes, liquid crystals, plasma pixels, or another technology. For example, the display 104 may be based on a technology that is embedded into the pane 102 for viewing by the occupant 230 of the vehicle.

The HUD control arrangement 200 in some examples further includes a video display controller 210 and a motor 212. In some examples, the HUD control arrangement 202 is implemented within a vehicle to adjust a level of obscuring or blocking of display elements projected onto the pane 102. It should be understood, however, that the HUD control arrangement 202 may be implemented within any general structure wherein HUD information may be displayed.

In one or more examples, the mirror 206 is a fold mirror, which can be planar or aspherical and reflects received light toward the mirror 208. As another example, the mirror 208 is a tiltable mirror, which can be aspherical and direct light toward the pane 102. The direction of the light directed from the mirror 208 is controlled to be within an optical path. It is understood that the optical path may vary, for example, based on whether the occupant 230 is authorized or unauthorized.

In one or more examples, the video display controller 210 includes a memory 216 and a processor 214, wherein the processor 214 is configured to execute instructions stored in the memory 216 to control the motor 212 and/or the output of the display 104. It is understood that the display 104 outputs an image or other data and/or a light to be reflected against the mirror 206. The video display controller 210 may control the display 104 to project particular images and/or light based on the instructions stored in the memory 216 and/or based on other inputs from a user. For example, a user input interface 218 may be used to provide instructions to the video display controller 210 to control the display 104 based on user input and other information, such as vehicle data/status, identity of the occupant 230, etc. For example, user input to change a type of information displayed (e.g., to select between instrument data such as speed/RPM/etc. and navigation data such as turn directions), to select options when a graphical user interface is displayed, and/or to otherwise indicate user preferences are provided to the video display controller 210 and processed to generate the displayed data for viewing by the occupant 230 that is authorized to operate the vehicle. It is understood that the user input interface 218, in some examples, receives user input from any suitable user input device, including but not limited to a touch screen, vehicle-mounted actuators (e.g., buttons, switches, knobs, dials, etc.), a microphone (e.g., for voice commands), an external device (e.g., a mobile device of a vehicle occupant), and/or other user input devices.

The vehicle use authorization system 220 receives data from vehicle sensors and/or systems and determines (e.g., using facial recognition, user password input, etc.) whether the occupant 230 is an authorized user of the vehicle. The vehicle use authorization system 220 in various examples may also receive other vehicle information, such as a vehicle status and/or other vehicle data, which may be sent to the video display controller 210 to adjust content and/or format of the displayed data in response to whether the occupant 230 is authorized or unauthorized. For example, a current speed may be supplied (e.g., via a controller-area network, CAN, bus of the vehicle) and sent to the video display controller 210 to update the display of a current speed of the vehicle for an authorized occupant. Inputs may also be received from a navigation module (not shown) of the vehicle and/or other information sources within the vehicle.

In some examples, based on a determination by the vehicle use authorization system 220 using information from, for example, the camera 120, an unauthorized occupant 230 is limited or prevented from operating the vehicle and a notification (e.g., text message, visual alert, audible alert, etc.) is concurrently generated by a notification system 222 to alert the owner or authorized user (or other individual or entity) of the vehicle that the unauthorized occupant 230 has been detected. In one example, the camera 120 is a dash camera that has a facial detection feature and the vehicle is powered with an AR/VR HUD with the pane 102 acting as the display 104.

Using one or more examples, the unauthorized occupant(s) 230 is prevented from operating the vehicle, such as to prevent a theft of the vehicle, with the AR/VR HUD technology. For example, the unauthorized driver can be identified using a dashcam when the vehicle starts and then one or more AR/VR (or other display) techniques are used by the HUD control arrangement 202 to block a view through the pane 102 (e.g., the windshield display) so that the unauthorized driver cannot see beyond the blurred or obstructed windshield. As described herein, the owner of the vehicle or other authorized person associated with the vehicle is notified of the unauthorized operation (e.g., theft occurrence). It should be appreciated that if the occupant 230 is identified to be authorized to operate or be inside the vehicle, the HUD control arrangement 202 is configured to operate in a normal operating state and provide normal HUD information on the windshield and make the windshield visible therethrough.

It should be noted that the HUD control arrangement 202 in some examples is configured using AR HUD technology and/or VR HUD technology by which the windshield is useable for displaying useful information to the driver (e.g., AR HUD uses projection technologies to display alerts or navigation to facilitate operation of the vehicle). In some examples, the HUD control arrangement 202 is operable with different types of panes, such as film displays embedded inside the windshield. Thus, it should be appreciated that various example described herein can be used with different types of HUD systems and different types of panes.

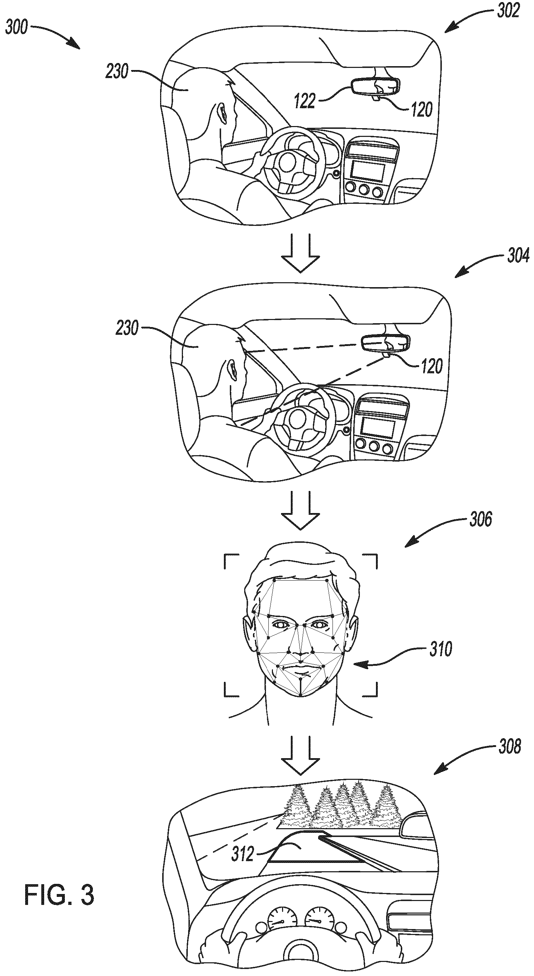

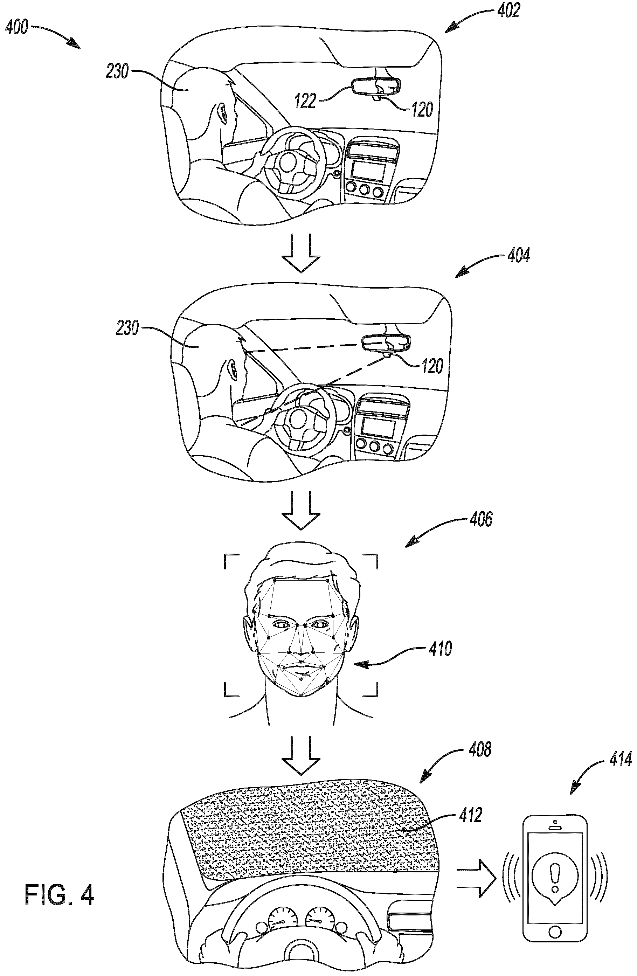

FIG. 3 illustrates an operation flow 300 when the occupant 230 is authorized and FIG. 4 illustrates an operation flow 400 when the occupant 230 is not authorized (unauthorized). As can be seen in FIG. 3, the operation flow 300 begins with an individual entering the vehicle, thereby becoming the occupant 230, and turning on or switching on the vehicle at 302. That is, the occupant 230 attempts to start or starts the vehicle such that battery power is provided to one or more system of the vehicle, including the camera 120 and the HUD control arrangement 202 in various examples.

With the power activated or initiated, the identity of the occupant 230 is analyzed at 304 using facial detection in some examples. That is, the camera 120 or other sensing or imaging device capable of imaging or acquiring information about the occupant 230 detects that the occupant 230 is present (which may also use other sensors, such as a weight sensor in a seat of the vehicle) and performs facial recognition as described in more detail herein. For example, at 306, based on a facial detection 310, which in this case identifies the occupant 230 as an authorized occupant (e.g., a known driver or other known individual stored in a database), the HUD control arrangement 202 operates in a normal operating state at 308. That is, the windshield is not blocked, obscured, or blurred, and normal HUD information 312 is displayed, such as navigation and other AR/VR features that are displayed under normal operating conditions (e.g., navigation lines or arrows, etc.). Thus, in this example, in response to a "pass" condition for the facial recognition, normal HUD operation is performed by the HUD control arrangement 202, such that the authorized occupant 230 is able to see through the windshield (e.g., the pane 102). The example of FIG. 3 thereby illustrates a scenario where the driver has a face that passes facial recognition as being registered within the facial recognition database as an authorized occupant. It should be noted that the authorized occupant may be authorized as a driver only, a passenger only, or both a driver and a passenger.

FIG. 4 illustrates an operation flow 400 when the occupant 230 is not authorized. As can be seen, the operation flow 400 begins with an individual entering the vehicle, thereby becoming the occupant 230, and turning on or switching on the vehicle at 402. That is, the occupant 230 attempts to start or starts the vehicle such that battery power is provided to one or more system of the vehicle, including the camera 120 and the HUD control arrangement 202 in various examples.

With the power activated or initiated, the identity of the occupant 230 is analyzed at 404 using facial detection in some examples. That is, the camera 120 or other sensing or imaging device capable of imaging or acquiring information about the occupant 230 detects that the occupant 230 is present (which may also use other sensors, such as a weight sensor in a seat of the vehicle) and performs facial recognition as described in more detail herein. For example, at 406, based on a facial detection 410, which in this case identifies the occupant 230 as an unauthorized occupant (e.g., an unknown driver or other unknown individual stored in a database), the HUD control arrangement 202 operates in an unauthorized (or view blocking) operating state at 408. That is, the windshield is blocked, obscured, or blurred with a HUD display element 412, and normal HUD information 312 is not displayed. For example, the AR/VR HUD fills the windshield with one or more colors that are hazy or otherwise block the view of the unauthorized occupant 230. That is, one or more HUD display elements are presented in the windshield to prevent or significantly limit the view of the road by the unauthorized occupant.

It should be noted that the HUD control arrangement 202 in one or more examples is configured to display any element, feature (e.g., a dense pattern of lines or shapes, a moving pattern, etc.), light (e.g., high intensity light or color), etc. that blocks part or all of the windshield. A notification is also provided at 414, which in some examples, is provided concurrently or simultaneously with blocking the view through the windshield. For example, an alert is sent to the owner of the vehicle or other selected person(s) indicating the unauthorized occupant 230. In some examples, the alert is communicated via a telematic system or by other alert (e.g., high pitched or loud sound or car alarm) that also indicates to the external environment surrounding the vehicle that the unauthorized occupant 230 is present in the vehicle. In some examples, the notification can be provided to authorities, such as the police. In some examples, the alert, after a time period, causes the battery of the vehicle to have insufficient power to start the vehicle.

Thus, in this example, in response to a "fail" condition for the facial recognition, unauthorized (view limiting) HUD operation is performed by the HUD control arrangement 202, such that the unauthorized occupant 230 is unable to see through the windshield (e.g., the pane 102). The example of FIG. 4 thereby illustrates a scenario where the driver has a face that fails facial recognition as being unregistered within the facial recognition database as an unauthorized occupant. It should be noted that the unauthorized occupant may be unauthorized as a driver only, a passenger only, or both a driver and a passenger.

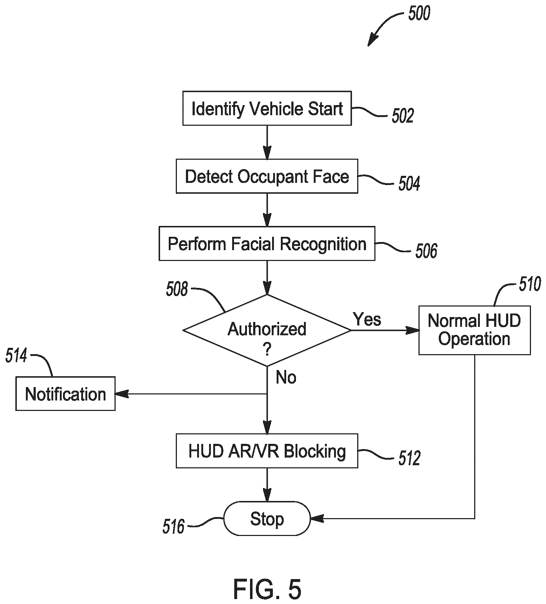

FIG. 5 is a flowchart illustrating an example method 500 for controlling a HUD to prevent unauthorized vehicle operation. At operation 502, a vehicle start is identified. For example, as described in more detail herein, a vehicle start is identified by a car being switched on, with or without a key. In response to the vehicle start, an occupant's face is detected at operation 504. For example, a facial image of a driver of the vehicle is obtained.

Facial recognition of the occupant is performed at 506. For example, a facial recognition process is performed on face data acquired by a camera within the vehicle. A determination is then made at operation 508 whether the occupant is authorized to operate the vehicle. That is, using the facial recognition of the occupant, a determination is made whether the occupant in authorized to be in and/or operate the vehicle as described in more detail herein. For example, the facial features of the recognized face are compared to authorized occupants to determine whether the face is associated with an authorized occupant.

In response to a determination that the face is associated with an authorized occupant, normal HUD operations are performed at operation 510. That is, normal HUD information and allowing the occupant to view the road through the windshield are provided. As such, normal vehicle operation (e.g., driving) can be performed.

In response to a determination that the face is not associated with an authorized occupant, HUD AR/VR blocking (e.g., windshield view blocking) is performed at operation 512. That is, the windshield of the vehicle is blocked, obscured, or blurred with the HUD display to prevent normal operation of the vehicle. As described in more detail herein, the HUD display prevents the unauthorized occupant from viewing the road through the windshield. In response to a determination that the face is not associated with an authorized occupant, a notification (e.g., an alert to a third party) is also provided at operation 514 as described in more detail herein. For example, the owner of the vehicle and/or the police are notified of the unauthorized occupant in the vehicle. The method 500 then stops at 516.

Thus, one or more implementations provide for preventing unauthorized operation of a vehicle by using the HUD display to block the view of an unauthorized occupant through the windshield.

Based on the foregoing, the following provides a general overview of the present disclosure and is not a comprehensive summary. In a first one or more embodiments A1, a method comprises identifying a vehicle start; detecting a face of an occupant in response to identifying the vehicle start; performing facing recognition on the detected face; determining whether the detected face is associated with an authorized occupant for the vehicle; controlling a HUD system to display normal HUD information in response to determining that the detected face is associated with the authorized occupant for the vehicle; and controlling the HUD display to perform windshield view blocking in response to determining that the detected face is not associated with the authorized occupant for the vehicle.

In a second one or more embodiments A2, which may include the first one or more embodiments A1, the method further comprises providing a notification in response to determining that the detected face is not associated with the authorized occupant for the vehicle. In a third one or more embodiments A3, which may include any combination one or more embodiments A1-A2, the method further comprises displaying one or more display elements on the windshield to block a view through the windshield in response to determining that the detected face is not associated with the authorized occupant for the vehicle.

In a fourth one or more embodiments A4, which may include any combination of the one or more embodiments A1-A3, the method further comprises controlling the HUD display to perform windshield view blocking comprises one of obscuring or blurring a view through the windshield using one or more AR/VR HUD display elements. In a fifth one or more embodiments A5, which may include any combination of the one or more embodiments A1-A4, the method further comprises wherein the one or more AR/VR HUD display elements comprise a colored display element or a high intensity display element. In a sixth one or more embodiments A6, which may include any combination of the one or more one or more embodiments A1-A5, the method further comprises wherein an entirety of the windshield is obscured or blocked. In a seventh one or more embodiments A7, which may include any combination of the one or more embodiments A1-A6, the method further comprises wherein a portion of the windshield is obscured or blocked.

In an eighth one or more embodiments A8, which may include any combination of the one or more embodiments A1-A7, the method further comprises wherein detecting a face of an occupant comprises imaging a face of the occupant using a camera mounted within the vehicle.

In a ninth one or more embodiments A9, which may include any combination of the one or more embodiments A1-A8, a HUD system comprises a camera configured to acquire a facial image of an occupant of a vehicle; a HUD display; and a HUD control arrangement configured to generate and display, via the HUD display, one or more display elements on a windshield of the vehicle in response to determining that the facial image is not associated with an authorized occupant for the vehicle. In a tenth one or more embodiments A10, which may include any combination of the one or more embodiments A1-A9, the HUD system further comprises a notification system configured to provide a notification in response to determining that the facial image is not associated with the authorized occupant for the vehicle.

In an eleventh one or more embodiments A11, which may include any combination of the one or more embodiments A1-A10, the HUD system further comprises wherein the HUD control arrangement is further configured to display, via the HUD display, one or more display elements on the windshield to block a view through the windshield in response to determining that the facial image is not associated with the authorized occupant for the vehicle. In a twelfth one or more embodiments A12, which may include any combination of the one or more embodiments A1-A11, the HUD system further comprises wherein the HUD control arrangement is further configured to cause the HUD display to perform windshield view blocking comprising one of obscuring or blurring a view through the windshield using one or more AR/VR HUD display elements.

In a thirteenth one or more embodiments A13, which may include any combination of the one or more embodiments A1-A12, the HUD system further comprises wherein the one or more AR/VR HUD display elements comprise a colored display element or a high intensity display element. In a fourteenth one or more embodiments A14, which may include any combination of the one or more embodiments A1-A13, the HUD system further comprises wherein an entirety of the windshield is obscured or blocked. In a fifteenth one or more embodiments A15, which may include any combination of the one or more embodiments A1-A14, the HUD system further comprises wherein a portion of the windshield is obscured or blocked. In a sixteenth one or more embodiments A16, which may include any combination of the one or more embodiments A1-A15, the HUD system further comprises wherein the HUD control arrangement is further configured to display, via the HUD display, normal HUD information in response to determining that the facial image is associated with the authorized occupant for the vehicle.

In a seventeenth one or more embodiments A17, which may include any combination of the one or more embodiments A1-A16, one or more non-transitory computer-readable media storing processor-executable instructions that, when executed by at least one processor, cause the at least one processor to: identify a vehicle start; detect a face of an occupant in response to identifying the vehicle start; perform facing recognition on the detected face; determine whether the detected face is associated with an authorized occupant for the vehicle; control a HUD system to display normal HUD information in response to determining that the detected face is associated with the authorized occupant for the vehicle; and control the HUD display to perform windshield view blocking in response to determining that the detected face is not associated with the authorized occupant for the vehicle.

In an eighteenth one or more embodiments A18, which may include any combination of the one or more embodiments A1-A17, the HUD system further the one or more non-transitory computer-readable media further comprises wherein the instructions, when executed by the at least one processor, further cause the at least one processor to provide a notification in response to determining that the facial image is not associated with the authorized occupant for the vehicle. In a nineteenth one or more embodiments A19, which may include any combination of the one or more embodiments A1-A18, the one or more non-transitory computer-readable media further comprises wherein the instructions, when executed by the at least one processor, further cause the at least one processor to display one or more display elements on the windshield to block a view through a windshield in response to determining that the detected face is not associated with the authorized occupant for the vehicle. In a twentieth one or more embodiments A20 which may include any combination of the one or more embodiments A1-A19, the one or more non-transitory computer-readable media further comprises wherein controlling the HUD display to perform windshield view blocking comprises one of obscuring or blurring a view through a windshield using one or more AR/VR HUD display elements.

Unless otherwise expressly indicated herein, all numerical values indicating mechanical/thermal properties, compositional percentages, dimensions and/or tolerances, or other characteristics are to be understood as modified by the word "about" or "approximately" in describing the scope of the present disclosure. This modification is desired for various reasons including industrial practice, material, manufacturing, and assembly tolerances, and testing capability.

As used herein, the phrase at least one of A, B, and C should be construed to mean a logical (A OR B OR C), using a non-exclusive logical OR, and should not be construed to mean "at least one of A, at least one of B, and at least one of C."

In this application, the term "controller" and/or "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components (e.g., op amp circuit integrator as part of the heat flux data module) that provide the described functionality; or a combination of some or all of the above, such as in a system-on-chip.

Implementations of the disclosure are described in the general context of computer-executable instructions, such as program modules, executed by one or more computers or other devices in software, firmware, hardware, or a combination thereof. In one example, the computer-executable instructions are organized into one or more computer-executable components or modules. Generally, program modules include, but are not limited to, routines, programs, objects, components, and data structures that perform particular tasks or implement particular abstract data types. In one example, aspects of the disclosure are implemented with any number and organization of such components or modules. For example, aspects of the disclosure are not limited to the specific computer-executable instructions or the specific components or modules illustrated in the figures and described herein. Other examples of the disclosure include different computer-executable instructions or components having more or less functionality than illustrated and described herein. In implementations involving a general-purpose computer, aspects of the disclosure transform the general-purpose computer into a special-purpose computing device when configured to execute the instructions described herein.

The term memory is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general-purpose computer to execute one or more particular functions embodied in computer programs. The functional blocks, flowchart components, and other elements described above serve as software specifications, which can be translated into the computer programs by the routine work of a skilled technician or programmer.

Although described in connection with the processor 214, examples of the disclosure are capable of implementation with numerous other general-purpose or special-purpose computing system environments, configurations, or devices. Implementations of well-known computing systems, environments, and/or configurations that are suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, VR devices, holographic device, and the like. Such systems or devices accept input from the user in any way, including from input devices such as a keyboard or pointing device, via gesture input, proximity input (such as by hovering), and/or via voice input.

The description of the disclosure is merely exemplary in nature and, thus, variations that do not depart from the substance of the disclosure are intended to be within the scope of the disclosure. Such variations are not to be regarded as a departure from the spirit and scope of the disclosure.

## Claims

1. A method, comprising:
identifying a vehicle start;
detecting a face of an occupant in response to identifying the vehicle start;
performing facing recognition on the detected face;
determining whether the detected face is associated with an authorized occupant for the vehicle;
controlling a HUD system to display normal HUD information in response to determining that the detected face is associated with the authorized occupant for the vehicle; and
controlling the HUD display to perform windshield view blocking in response to determining that the detected face is not associated with the authorized occupant for the vehicle.

2. The method of claim 1, further comprising providing a notification in response to determining that the detected face is not associated with the authorized occupant for the vehicle.

3. The method of claim 1, further comprising displaying one or more display elements on the windshield to block a view through the windshield in response to determining that the detected face is not associated with the authorized occupant for the vehicle.

4. The method of claim 1, wherein controlling the HUD display to perform windshield view blocking comprises one of obscuring or blurring a view through the windshield using one or more AR/VR HUD display elements.

5. The method of claim 4, wherein the one or more AR/VR HUD display elements comprise a colored display element or a high intensity display element.

6. The method of claim 4, wherein
either an entirety of the windshield is obscured or blocked, or
a portion of the windshield is obscured or blocked.

7. The method of claim 1, wherein detecting the face of the occupant comprises imaging a face of the occupant using a camera mounted within the vehicle.

8. A HUD system, comprising
a camera configured to acquire a facial image of an occupant of a vehicle;
a HUD display; and
a HUD control arrangement configured to generate and display, via the HUD display, one or more display elements on a windshield of the vehicle in response to determining that the facial image is not associated with an authorized occupant for the vehicle, wherein the one or more display elements block a view through the windshield.

9. The HUD system of claim 8, further comprising a notification system configured to provide a notification in response to determining that the facial image is not associated with the authorized occupant for the vehicle.

10. The HUD system of claim 8, wherein the HUD control arrangement is further configured to display, via the HUD display, one or more display elements on the windshield to block a view through the windshield in response to determining that the facial image is not associated with the authorized occupant for the vehicle.

11. The HUD system of claim 8, wherein the HUD control arrangement is further configured to cause the HUD display to perform windshield view blocking comprising one of obscuring or blurring a view through the windshield using one or more AR/VR HUD display elements.

12. The HUD system of claim 11, wherein the one or more AR/VR HUD display elements comprise a colored display element or a high intensity display element.

13. The HUD system of claim 11, wherein
either an entirety of the windshield is obscured or blocked, or
a portion of the windshield is obscured or blocked.

14. The HUD system of claim 8, wherein the HUD control arrangement is further configured to display, via the HUD display, normal HUD information in response to determining that the facial image is associated with the authorized occupant for the vehicle.

15. One or more non-transitory computer-readable media storing processor-executable instructions that, when executed by at least one processor, cause the at least one processor to:
identify a vehicle start;
detect a face of an occupant in response to identifying the vehicle start;
perform facing recognition on the detected face;
determine whether the detected face is associated with an authorized occupant for the vehicle;
control a HUD system to display normal HUD information in response to determining that the detected face is associated with the authorized occupant for the vehicle; and
control the HUD display to perform windshield view blocking in response to determining that the detected face is not associated with the authorized occupant for the vehicle.
